# EUROPÄISCHE PATENTSCHRIFT

(11) **EP 1 677 974 B1**
(45) Veröffentlichungstag und Bekanntmachung des Hinweises auf die Patenterteilung: **02.09.2009**
(21) Anmeldenummer: 04798165.9
(22) Anmeldetag: 02.11.2004
(51) Int. Cl.: B32B 15/08, B32B 7/12, C09J 7/02, G09F 19/22

(54) **TRÄGERELEMENT FÜR DIE HERSTELLUNG VON WERBEMATERIALIEN**
SUPPORT ELEMENT, FOR THE PRODUCTION OF PUBLICITY MATERIALS
ELEMENT SUPPORT POUR LA PRODUCTION DE DOCUMENTS PUBLICITAIRES

(30) Priorität: 31.10.2003 DE 20316799 U
(43) Veröffentlichungstag der Anmeldung: 12.07.2006
(73) Patentinhaber: Schmich, Andreas, 53121 Bonn (DE)
(72) Erfinder: SCHMICH, Andreas, 53121 Bonn (DE); TREDER, Joachim, 50996 Köln (DE); DAHLMANN, Frank, W., G., 50674 Köln (DE)
(74) Vertreter: Fitzner, Uwe
(86) Internationale Anmeldenummer: PCT/EP2004/052818
(87) Internationale Veröffentlichungsnummer: WO 2005/110738

(56) Entgegenhaltungen:
- EP-A- 0 538 746
- EP-A- 0 569 921
- GB-A- 1 360 540
- PATENT ABSTRACTS OF JAPAN Bd. 1998, Nr. 06, 30. April 1998 (1998-04-30) & JP 10 034842 A (TOYO POLYMER KK), 10. Februar 1998 (1998-02-10)

## Beschreibung

Die vorliegende Erfindung betrifft ein Trägerelement für die Herstellung von Werbematerialien und dessen Verwendung.

Herkömmliche Werbematerialien umfassen gedruckte Papierbahnen und Folien, welche an entsprechenden Werbewänden festgelegt werden. Es muß dabei darauf geachtet werden, daß eine sichere Verbindung zwischen dem bedruckten Papier und der als Untergrund benutzten Plakatwand erreicht und beibehalten wird. Das ist im allgemeinen nur dann erreichbar, wenn die Plakatwand dem unmittelbaren Zugriff von Passanten entzogen ist bzw. ein solcher Zugriff nur mit bewußter Zerstörungsabsicht erfolgen kann. Aus diesem Grunde müssen als Untergrund benutzte Plakatwände an entsprechend geschützten Orten aufgestellt sein. Im Hinblick auf diese Probleme wurde bereits vorgeschlagen, besondere Werbematerialien einzusetzen, welche auch auf frei zugänglichen Untergrundbereichen, wie etwa auf Wegen, Straßen oder dergleichen aufgebracht werden können. Im Hinblick auf die dabei hervortretenden Probleme hinsichtlich des unvermeidlichen Abriebs des Werbemotivs wurde vorgeschlagen, Werbematerialien mit einer Laminatstruktur einzusetzen, bei denen das Werbemotiv von einer Schutzschicht abgedeckt ist. Die Herstellung entsprechender Werbematerialien ist allerdings mit hohen Kosten verbunden.

Aus der europäischen Patentschrift 0 569 921 B1 ist ein selbstklebendes Oberflächenbelagmaterial bekannt. Die Möglichkeit der Aufbringung auf Untergrundbereiche, z.B. Wege oder Straßen wird hier jedoch nicht angesprochen. Demgemäß gehen aus dieser Schrift auch die mit dem Aufbringen auf die genannten Untergrundmaterialien verbundenen Probleme nicht hervor.

Die DE 4 129 262 A1 beschreibt folienförmige Wechseldekorelemente. Diese sind jedoch für die Schaufensteraußengestaltung ausgelegt. Die mit dem Aufbringen auf Untergründe verbundenen Probleme gehen daher ebenfalls aus dieser Schrift nicht hervor.

Der folgenden Erfindung liegt demgemäß die Aufgabe zugrunde, Trägerelemente für die Herstellung von Werbematerialien bereit zu stellen, welche unter Gewährleistung einer hohen Abriebbeständigkeit des Werbemotivs auf Untergründe wie Straßen, Wege und dergleichen aufbringbar sind. Die Elemente sollen unter den üblichen Umwelteinflüssen, insbesondere Temperaturbedingungen einerseits haltbar und andererseits ohne Beschädigung des Untergrunds wieder abziehbar sein.

Erfindungsgemäß wird diese Aufgabe durch ein mehrschichtiges Trägerelement für die Herstellung von Werbematerialien gelöst, welches folgende Schichten umfaßt:
a) Eine Folie mit einer Oberfläche, welche eine Rauhtiefe von mindestens 10 µm aufweist,
b) einer nicht-elastischen Schicht und
c) einer Haftmittelschicht.

Auf die Haftmittelschicht kann ggf. ein Trägermaterial mit Dehäsivbeschichtung, vorzugsweise aus Silikon aufgebracht werden.

Für die Folie a), welche eine Rauhtiefe von mindestens 10 µm aufweist, sind verschiedene Materialien einsetzbar. Erfindungsgemäß besonders bevorzugt sind Polymere oder Polymergemische, die die Folien enthalten oder aus denen diese bestehen können. Hierfür können alle bekannten Polymere wie z.B. Polyvinylchlorid, Polyethylen, Polyacrylat oder Polyurethan zum Einsatz kommen. Besonders bevorzugt ist erfindungsgemäß ein Material, welches Polyurethane und insbesondere Polyvinylchlorid enthält oder hieraus besteht (hier sind die Materialien näher zu beschreiben). Eine erfindungsgemäß bevorzugt eingesetzte Folie enthält aus Hauptbestandteil Polyvenylchlorid sowie als weitere Bestandteile unter anderem Weichmacher, Pigmente und Füllstoffe.
Ein Beispiel für eine typische Zusammensetzung ist folgende:
Polyvinylchlorid 60 - 80 Gew.%
Weichmacher 5-40 Gew.% (z. B. ein Produkt der BASF AG Typ Platinol, Palamoll
Pigmente, Füllstoffe 0-25 Gew.% (z. B. CaCO₃, TiO₂)

Ein Beispiel für ein weiteres einsetzbares Folienmaterial ist das Acryl-Urethan, welches in der EP 0 617 711 M1 beschrieben ist. In diesem Zusammenhang sei insbesondere auf die Seiten 6 bis 28 dieser Schrift verwiesen.

Die Rauhtiefe der Folienoberfläche liegt vorzugsweise bei 100 bis 200 µm, besonders bevorzugt 50 bis 150 µm, ganz besonders bevorzugt von 80 bis 120 µm, höchst bevorzugt von 90 bis 110 µm.
Durch die genannte Rauhtiefe der Folienoberfläche ergibt sich, daß die Oberfläche trittfest und rutschsicher ist. Ferner wird eine Vergrößerung der effektiven Oberfläche erreicht.

Eine Einstufung des erfindungsgemäß eingesetzten Materials ist nach der Verordnung ZH 1/571 des Hauptverbandes der gewerblichen Berufsgenosseschaft möglich. Das erfindungsgemäß eingesetzte Material ist typischerweise in Bewertungsklasse 9 einzustufen.

Damit eignet sich die Folie ganz besonders für das abriebfeste Aufbringen von weiteren Schichten, insbesondere von Farbschichten. Denn die Rauhigkeit der Oberfläche bewirkt eine Verzahnung der Oberfläche mit der jeweiligen Farbschicht, so daß die Festigkeit und damit die Abriebfestigkeit der Farbe entscheidend erhöht wird. Abgesehen davon kommt es überraschenderweise zu einer Erhöhung der Farbbrillanz.

Die Oberflächenenergie der Folie beträgt vorzugsweise mindestens 36 mN/M, besonders bevorzugt mehr als 40 mN/M, ganz besonders bevorzugt mehr als 42 mN/M.
Erreicht wird dies vorzugsweise durch eine besondere Struktur der erfindungsgemäß eingesetzten Folie, insbesondere wenn sie Polyvenylchlorid enthält oder daraus besteht.

Die beschriebenen Folien a) ermöglichen insbesondere infolge ihrer Rauhigkeit und Oberflächenenergie sowie ihrer inherent vorhandenen Polarität und ihres molekularen Aufbaus eine intensive Verbindung mit aufgebrachten Farben. Dadurch läßt sich eine Beständigkeit insbesondere gegen Feuchtigkeit, Licht, Temperatur, Chemikalien und chemische Einflüsse erreichen. Diese Eigenschaften werden ohne zusätzliche kostenverursachende Behandlung der Oberfläche der Folie erreicht. Im Einzelfall können die oben beschriebenen Eigenschaften durch eine nachträgliche Korona-Behandlung oder durch eine Grundierung erreicht werden.

Die beschriebene Folie a) ist ihrerseits auf eine nicht-elastischen Schicht b) aufgebracht. Nicht-elastisch bedeutet in diesem Zusammenhang, daß beim Aufbringen des Trägerelements auf einen Untergrund eine Anpassung an Unebenheiten erreicht wird und der Gesamtverbund des Trägerelements in der an diese Untergrundform angepaßten Ausgestaltung verbleibt. Das Trägerelement kann demgemäß durch Ausüben eines leichten Drucks an die jeweiligen Untergrundflächen angepaßt werden.

Erfindungsgemäß hat die nicht-elastische Schicht vorzugsweise ein Tg von -20 bis -60°C besonders bevorzugt von -20 bis -50°C, ganz besonders bevorzugt von -30 bis -50°C.

Besonders vorteilhaft ist der Einsatz von Metall enthaltenden Materialien. Ggf. können die erfindungsgemäß eingesetzten nicht-elastischen Schichten auch aus Metall bestehen. Besonders bevorzugt sind Aluminium enthaltende oder hieraus bestehende Schichten.

Die Schichten weisen vorzugsweise eine Dicke zwischen 20 und 100 µm, besonders bevorzugt 25 bis 50 µm, ganz besonders bevorzugt 50µm. Die erfindungsgemäß beschriebenen mechanischen und physikalischen Eigenschaften werden vorzugsweise bei Einhaltung dieser Schichtdicke erzielt, insbesondere wenn die Schichten Aluminium enthalten oder hieraus bestehen. Zum Erhalt einer auch auf unebenen Untergrundstrukturen festlegbaren Anordnung mit dem erfindungsgemäßen Trägerelement unter gleichzeitiger Sicherstellung einer ausreichenden mechanischen Festigkeit des Werbematerials selbst hat es sich als zweckmäßig erwiesen, wenn als nicht-elastische Schicht eine vorzugsweise gewalztes Aluminium enthaltende nachgiebige Schicht angeordnet ist.

Zum Befestigen des erfindungsgemäßen Trägermaterials auf einem Untergrund kann die nicht-elastische Schicht b) ein zum Erzeugen einer Haftung geeignetes Mittel c) aufweisen. Als besonders günstig hat es sich erwiesen, wenn dieses die Haftung erzeugende Mittel beim Anlegen eines Druckes haftende Eigenschaften erhält, welche ohne Anlegen des Drucks nicht hervortreten.

Neben dem beschriebenen Haftvermittler können auch beliebige andere übliche Klebstoffe angewendet werden. Erfindungswesentlich ist hierbei, daß Klebstoffe eingesetzt werden, welche ohne Beschädigung des Trägermaterials und des Untergrundes abziehbar sind. Nach Möglichkeit sollen in Abhängigkeit vom Verschmutzungsgrad auch Möglichkeiten für eine Wiederverwendbarkeit des Trägermaterials sichergestellt sein, d.h. das Trägermaterial soll nach Möglichkeit an anderer Stelle wieder aufgebracht werden können, sofern der Verschmutzungsgrad der Kleberschicht dies gestattet.

Demgemäß können erfindungsgemäß neben den beschriebenen unter Druck einsetzbaren Haftvermittler auch beispielsweise thermisch oder in anderer Weise chemisch abbindende Klebstoffe zum Einsatz kommen. Vorzugsweise kommen Formulierungen für Klebstoffe in Betracht, welche bei 5 bis 25°C, aber auch bei Temperaturen von weniger als 10°C vorzugsweise bei 5 bis 10°C applizierbar sind.

Eine weitere Anforderung an den Haftvermittler ist, daß die Verbindung mit dem Untergrund unter üblichen Umweltbedingungen beständig ist. D.h., gegen physikalische und chemische Einflüsse muß eine ausreichende Haftfestigkeit gegeben sein. Insbesondere soll das erfindungsgemäße Trägerelement im Temperaturbereich von -20 bis +80 °C auf dem jeweiligen Untergrund haften. Gleichwohl soll - wie beschrieben - eine Ablösbarkeit (Repositionierbarkeit) möglichst von Hand möglich bleiben.

Als Haftvermittler haben sich erfindungsgemäß insbesondere solche auf Kautschukbasis und Acrylatbasis bewährt. Daneben sind selbstverständlich auch alle anderen üblichen Haftvermittler einsetzbar, welche die oben beschriebenen Eigenschaften aufweisen.

Erfindungsgemäß soll die Schichtdicke des Haftvermittlers derart sein, daß ein Aufbringen auf schwierige Untergründe möglich ist. Insbesondere sollen größere Unebenheiten ausgleichbar sein. Hierfür ist es erforderlich, daß die Schichtdicke in einem ausreichend großen Bereich dies gewährleistet. Demgemäß liegt die Schichtdicke erfindungsgemäß vorzugsweise zwischen 20 und 100 µm, ganz besonders bevorzugt zwischen 30 bis 80 µm, höchst bevorzugt zwischen 70 und 80 µm.

Das erfindungsgemäße Werbematerial - wie bereits oben erwähnt - sollte üblicherweise nach vorgegebener Zeit wieder von dem Untergrund entfernt werden können. Dazu ist bei einer besonders bevorzugten Ausführungsform zwischen der Haftungsmittelschicht und der nicht-elastischen Schicht eine Verstärkungsschicht, vorzugsweise ein Verstärkungsnetz angeordnet, welches beim Ablösen des Trägermaterials von dem Untergrund ein Einreißen des Trägerelements verhindert und die vollständige Ablösung vom Untergrund erleichtert.

Zur Lagerung und zum Transport des Trägerelements wird die Haftvermittlungsschicht c) vorzugsweise durch ein abziehbares Trägermaterial geschützt.

Das beschriebene mehrschichtige Trägerelement wird erfindungsgemäß vorzugsweise zur Herstellung von Werbematerialien eingesetzt. D.h., die Trägerelemente werden mit Farbe bedruckt. Die Farbe wird hierbei auf die Folie a) aufgebracht. Auf die Folie a) lassen sich erfindungsgemäß alle Farben aufbringen, welche für den Außenbereich geeignet sind. D.h., es kommen Farben in Betracht, welche thermisch, oxidativ oder mittels Strahlung härtbar sind. Die polymere Bindemittelmatrix von Farben benetzt die rauhe und polare Oberfläche der Folie in idealer Weise zur Herstellung einer intensiven Verbindung.

Insbesondere bei Verwendung von strahlenhärtbaren Farben, beispielsweise mittels UV-Strahlung, kommt es zu einer extrem dauerhaften kovalenten Wechselwirkung der Farbbindemittelmatrix mit reaktiven Stellen an der Folienoberfläche. Besonders vorteilhaft ist in diesem Zusammenhang der Einsatz von Farben auf Acrylatbasis oder auf Basis ungesättigter Kohlenwasserstoffe, z. B. Leinöl. Aber auch mit Farbsystemen, welche andere Polymere und andere als die obengenannten Härtungsmechanismen aufweisen, können dauerhaft und qualitativ hochwertig auf die Folien aufgebracht werden.

Im Rahmen der vorliegenden Erfindung wird demgemäß insbesondere von der Erkenntnis Gebrauch gemacht, daß die Abriebbeständigkeit eines auf einem Untergrund aufgebrachten Werbemotivs dadurch verbessert werden kann, daß die zur Erzeugung des Werbemotivs eingesetzte Farbe nicht durch einfaches Trocknen zum Aushärten gebracht wird, sondern mit Hilfe einer durch elektromagnetische Wellen, vorzugsweise UV-Licht, initiierten chemischen Reaktion umgesetzt wird, so daß sich die gewünschte Konsistenz ergibt. Es hat sich gezeigt, daß eine so ausgehärtete Farbe ein beachtliche Haftung am Untergrund aufweist und dadurch der gewünschte Abrieb Beständigkeit erhält.

Erfindungsgemäß vorteilhaft ist es, daß über die Farbschicht nicht eine weitere Laminatfolie gelegt werden muß. In ähnlichen Fällen wird nämlich zum Schutz der Druckfarbe eine zusätzliche kostenverursachende transparente Folienschicht aufgebracht. Im Fall der vorliegenden Erfindung kann dies jedoch entfallen, wodurch auch die spezifischen Werte der Folie im wesentlichen erhalten bleiben.

Im Hinblick auf die in vielen Fällen gewünschte Umweltverträglichkeit des Werbematerials ist die zur Herstellung desselben eingesetzte Farbe zweckmäßigerweise lösemittelfrei. Demgemäß kommen insbesondere strahlenhärtbare Farben erfindungsgemäß zum Einsatz. Eine mit Hilfe von UV-Licht aushärtbare Farbe kann photopolymerisierbare ungesättigte Monomere, Oligomere und/oder Präpolymere aufweisen. Durch intensives Bestrahlen mit UV-Licht erfolgt eine Polymerisation, die einerseits eine Verkapselung der in der Farbe enthaltenen Pigmente bewirkt und andererseits zu einer festen Verbindung mit der Farbe zum Trägermaterial führt. Dadurch wird die gewünschte Abriebbeständigkeit erreicht.

Die photopolymerisierbaren ungesättigten Monomere, Oligomere und/oder Präpolymere können einen Ester, eine Acryl- oder Methacrylsäure, Derivate davon und/oder N-Vinylamide, vorzugsweise mit einem Anteil von 10 bis 80 Gew.-%, besonders bevorzugt etwa 40 bis 60 Gew.-% aufweisen. Zur Beschleunigung der Photopolymerisation kann die Farbe einen bei Bestrahlung mit UV-Licht freie Radikale erzeugenden Photoinitiator aufweisen, wie etwa Benzophenone, in einem Anteil von vorzugsweise 0,5 bis 20 Gew.-%, insbesondere 3,5 bis 8 Gew.-% bezogen auf das Gesamtgewicht der Farbe. Zur Vermeidung einer unerwünschten farblichen Beeinflussung des Werbemotivs durch den Photoinitiator wird zweckmäßigerweise mit farblosen Photoinitiatoren gearbeitet.

Die Haftung der Pigmente auf der Folie des Trägerelements kann mit einem entsprechenden Mittel der Farbe, wie etwa einer organischen Stickstoffverbindung mit einem Molekulargewicht von vorzugsweise mehr als 200 enthaltenden Mittel verbessert werden. Dabei kann ein synergistischer Effekt ausgenutzt werden, weil Amide gleichzeitig als Photoinitiatoren und als haftungsverbesserndes Mittel benutzt werden können.

Nach dem Aufbringen der Farben auf die Folie a) wird das Trägermaterial sodann auf einen geeigneten Untergrund aufgebracht. Hierfür kommen insbesondere Trittflächen in Betracht. D.h., das erfindungsgemäße Trägerelement wird auf Asphalt, Beton oder ähnliche Materialien, welche für Trittflächen eingesetzt werden, verwendet.

Zum Befestigen des Trägerelements auf dem Untergrund wird das in der Regel bahnförmige mehrschichtige Trägermaterial auf dem gewünschten Untergrund aufgebracht. Dann wird es mit einem ein Gewicht von vorzugsweise 90 kg oder mehr aufweisende Rolldruckgerät möglichst langsam und mehrmals per Hand abgerollt. Dadurch wird das zum Erzeugen der Haftung einsetzbare Mittel aktiviert. Es kann sich dann mit dem Untergrund, wie etwa einer Asphalt- oder Betondecke, verbinden. Durch die Wahl eines Rollendruckgeräts mit einer einen geringen Durchmesser aufweisenden Rolle kann ein Druck erzeugt werden, welcher mehr als doppelt so hoch ist wie der durch Überrollen mit einem LKW-Reifen hervorgebrachte Anpreßdruck.

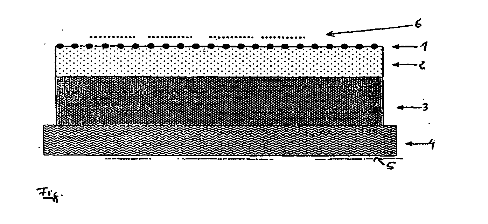

Im folgenden wird die Erfindung unter Bezugnahme auf die Figur beispielhaft erläutert:

In der Figur ist das erfindungsgemäße Trägerelement dargestellt. Danach ist auf die Oberfläche 2 der Folie 1 eine Farbe 6 aufgebracht. Bei dieser Farbe kann es sich um die Ausgestaltung eines beliebigen Werbemotivs handeln. Die Folie 1 ist ihrerseits auf die nicht-elastische Schicht 3 aufgetragen. In dem erfindungsgemäßen Beispiel handelt es sich um eine Aluminiumschicht mit einer

Dicke von 50 µm Zur Haftung an den gewünschten Untergründen ist auf die Schicht 3 wiederum eine Haftvermittlerschicht aufgebracht. Die Dicke dieser Haftvermittlerschicht beträgt in dem erfindungsgemäßen Beispiel 70µm. Als Material wird in dem erfindungsgemäßen Beispiel ein Klebstoff auf Kautschukbasis eingesetzt. Die Haftvermittlerschicht wird vor der Anwendung des erfindungsgemäßen Trägerelements mittels eines Trägermaterials 5 geschützt. Vor dem Auftrag des erfindungsgemäßen Trägerelements wird dieses Trägermaterial 5 abgezogen.

Zum Erzeugen einer Werbeanordnung auf beliebigen Trittflächen unter Einsatz des erfindungsgemäßen Trägerelements kann z. B. wie folgt vorgegangen werden:

Zunächst wird geprüft, ob bei einem gegebenen Untergrund eine Grundierung der Altmarkierung mit Farbe oder Plastik erforderlich oder verträglich ist. Dazu wird etwas Grundierungsmasse aufgesprüht und 10 bis 15 Minuten abgewartet. Wenn die Altmarkierung nicht aufweicht, kann weitergearbeitet werden. Ansonsten muß die Altmarkierung zunächst entfernt werden.

Durch geeignete Verfahren werden Feinmörtel, eventuell Öl, Fett, Wachs oder sonstige Stoffe, die eine Verbindung be- oder verhindern können, entfernt. In der Praxis haben sich in diesem Zusammenhang Schmirgelpapier, das Hochdruck-Wasserstrahl- sowie das Kugelstrahlverfahren bewährt. Dagegen kann das Feinfräsen mit Kegelmeißeln die Anforderungen an eine geeignete Oberfläche nicht erfüllen. Das Wasserstrahlverfahren sollte zum Erhalt einer trockenen Oberfläche bei den Verlegearbeiten 2 bis 3 Tage vor der Verlegung durchgeführt werden. Loser Schmutz oder Demarkierungsrückstände können trocken entfernt werden. In diesem Fall kann die Festlegung des Werbematerials am Untergrund unmittelbar daran erfolgen. Vor der Verlegung sind die Luft- und Bodentemperatur sowie die relative Luftfeuchtigkeit zu messen. Es muß auch die Untergrundfeuchte ermittelt werden. Nach Niederschlag sollte vor Festlegung ein Zeitraum von mindestens 24 Stunden vergehen.

Nach diesen Vorbereitungsarbeiten wird die Grundierung mit einem Grundierungssprühgerät gleichmäßig dünn in einem Arbeitsgang bis maximal 20 cm Sprühbreite aufgebracht. Bei größeren Breiten wird der Grundierungsstrich in einem zweiten Arbeitsgang mit einem zweiten Sprühgerät verbreitert. Die verwendete Grundierung sollte vor Gebrauch homogenisiert werden. Dazu kann die Grundierung gründlich geschüttelt werden. Alternativ kann die Grundierung mit flauschiger, lösemittelfester Grundierungsrolle dünn und gleichmäßig auf- und ausgerollt werden.

Anschließend sollte die Grundierung ausreichend trocknen. Der korrekte Auftrag der Grundierung kann anhand des Verbrauchs kontrolliert werden. Der korrekte Verbrauch liegt üblicherweise bei etwa 0,2 I pro m². In diesem Zusammenhang ist zu erwähnen, daß die Verwendung von Druckluft als Sprühmedium aufgrund des möglichen Wassergehalts der Luft problematisch sein kann. Das erfindungsgemäße Werbematerial wird maschinell oder bei kleinen Oberflächen per Hand ohne Dehnung/Zug auf den vorbereiteten Untergrund aufgelegt. Nach Vorandruck durch geeignete Verlegemaschinen, Überläufen oder Radüberrollung wird das erfindungsgemäße Werbematerial mit einem Rollenandruckgerät mit einem Gewicht von 90 kg oder mehr möglichst langsam und mehrmals per Hand überrollt, damit der Kleber unter der Folie aktiviert wird und sich mit der Fahrbahndecke verbinden kann. Beim Abrollen mit dem Andruckgerät muß darauf geachtet werden, daß alle Bereiche der Folie, insbesondere auch die Kanten erfasst werden, weil ansonsten die Gefahr einer späteren Teilablösung besteht. Das erfindungsgemäße Werbematerial lässt sich nach normaler Beanspruchung ohne dauerhafte Rückstände großflächig kalt abziehen. Das gilt insbesondere dann, wenn zwischen dem die Haftung erzeugenden Mittel und der das Werbemotiv aufweisenden Begrenzungsfläche ein Verstärkungsnetz angeordnet ist. Bei selten auftretenden Problemen im Verlauf der Entfernung des Werbematerials können die Werbematerialflächen kurzzeitig erwärmt werden, um so das Ablösevermögen zu verbessern.

## Patentansprüche

1. Mehrschichtiges Trägerelement für die Herstellung von Werbematerialien umfassend
a) eine Folie (1) mit einer Oberfläche (2), welche eine Rauhtiefe von mindestens 10 µm aufweist,
b) einer nicht-elastischen Schicht (3) und
c) einer Haftvermittlerschicht (4).

2. Trägerelement nach Anspruch 1,
**dadurch gekennzeichnet, daß** auf die Haftvermittlerschicht (4) eine Abdeckfolie (5) aufgebracht ist.

3. Trägerelement nach Anspruch 1 oder 2,
**dadurch gekennzeichnet, daß** die Folie (1) Polymere oder Polymergemische enthält.

4. Trägerelement nach einem der vorhergehenden Ansprüche,
**dadurch gekennzeichnet, daß** die Folie (1) Polyurethan enthält.

5. Trägerelement nach einem der vorhergehenden Ansprüche,
**dadurch gekennzeichnet, daß** die Folie (1) Polyvinylchlorid, Polyethylen oder Polyacrylat enthält oder hieraus besteht.

6. Trägerelement nach einem der vorhergehenden Ansprüche,
**dadurch gekennzeichnet, daß** die Oberfläche (2) eine Rauhtiefe von 70 bis 10 µm aufweist.

7. Trägerelement nach einem der vorhergehenden Ansprüche,
**dadurch gekennzeichnet, daß** die Oberflächenenergie der Folie (1) mindestens 40 mN beträgt.

8. Trägerelement nach einem der vorhergehenden Ansprüche,
**dadurch gekennzeichnet, daß** auf die Folie (1) eine Farbe (6) aufgetragen ist.

9. Trägerelement nach einem der vorhergehenden Ansprüche,
**dadurch gekennzeichnet, daß** auf die Folie (1) eine Farbschicht (6) aus lösemittelfreien Farben aufgetragen ist.

10. Trägerelement nach einem der vorhergehenden Ansprüche,
**dadurch gekennzeichnet, daß** die auf die Folie (1) aufgetragene Farbschicht (6) Farben aus photopolymerisierbaren ungesättigten Monomeren, Oligomeren und/oder Präpolymeren enthält.

11. Trägerelement nach Anspruch 10,
**dadurch gekennzeichnet, daß** die photopolymerisierbaren Monomere, Oligomere oder Präpolymere einen Ester, eine Acryl- oder Metacrylsäure, Derivate davon und/oder N-Vinylamide, vorzugsweise mit einem Anteil von 10 bis 80 Gew.-%, ganz besonders bevorzugt 40 bis 60 Gew.-% aufweisen.

12. Trägerelement nach einem der vorhergehenden Ansprüche,
**dadurch gekennzeichnet, daß** auf die Folie (1) eine Farbschicht (6) aufgebracht ist, welche einen bei Bestrahlung mit UV-Licht freie Radikale erzeugenden Photoinitiator aufweist, wie beispielsweise Benzophenone, mit einem Anteil von vorzugsweise 10 bis 80 Gew.-%.

13. Trägerelement nach einem der vorhergehenden Ansprüche,
**dadurch gekennzeichnet, daß** auf die Folie (1) eine Farbschicht (6) aufgebracht ist, welche ein die Haftung der Pigmente an dem Trägerelement förderndes Mittel, wie etwa organische Stickstoffverbindungen mit einem Molekülgewicht von vorzugsweise mehr als 200 aufweist.

14. Trägerelement nach einem der vorhergehenden Ansprüche,
**dadurch gekennzeichnet, daß** die nicht-elastische Schicht (3) ein Tg von - 20 bis -60 °C aufweist.

15. Trägerelement nach einem der vorhergehenden Ansprüche,
**dadurch gekennzeichnet, daß** die nicht-elastische Schicht (3) eine Dicke von 20 bis 100 µm aufweist.

16. Trägerelement nach einem der vorhergehenden Ansprüche,
**dadurch gekennzeichnet, daß** die nicht-elastische Schicht (3) Metalle enthält oder hieraus besteht.

17. Trägerelement nach einem der vorhergehenden Ansprüche,
**dadurch gekennzeichnet, daß** es Aluminium enthält.

18. Trägerelement nach einem der vorhergehenden Ansprüche,
**dadurch gekennzeichnet, daß** die Haftvermittlerschicht (4) derart ausgestaltet ist, daß sie bei weniger als 10 °C applizierbar ist.

19. Trägerelement nach einem der vorhergehenden Ansprüche,
**dadurch gekennzeichnet, daß** die Haftvermittlerschicht (4) derart ausgestaltet ist, daß sie zwischen -20 und +80 °C eine stabile Haftverbindung gewährleistet.

20. Trägerelement nach einem der vorhergehenden Ansprüche,
**dadurch gekennzeichnet, daß** die Haftvermittlerschicht (4) derart ausgestaltet ist, daß das Trägerelement abziehbar und wiederverwendbar ist.

21. Trägerelement nach einem der vorhergehenden Ansprüche,
**dadurch gekennzeichnet, daß** als Haftvermittlerschicht (4) eine Verbindung auf Kautschukbasis eingesetzt wird.

22. Trägerelement nach einem der vorhergehenden Ansprüche,
**dadurch gekennzeichnet, daß** die Haftvermittlerschicht (4) eine Verbindung auf Acrylatbasis ist.

23. Trägerelement nach einem der vorhergehenden Ansprüche,
**dadurch gekennzeichnet, daß** zwischen nicht-elastischer Schicht (3) und Haftvermittlerschicht (4) eine Verstärkungsschicht eingesetzt ist.

24. Verwendung des Trägerelements nach einem der vorhergehenden Ansprüche für die Herstellung von Werbematerial, das auf Asphalt, Beton und/oder anderen anorganischen Materialien enthaltenden Flächen aufgebracht wird.

25. Verwendung nach Anspruch 24,
**dadurch gekennzeichnet, daß** das Trägerelement auf Trittflächen aufgebracht wird.

## Claims

1. Multilayer backing element for the production of promotional materials encompassing
a) a foil (1) with a surface (2) whose roughness depth is at least 10 µm,
b) a non-elastic layer (3) and
c) an adhesion-promoter layer (4).

2. Backing element according to Claim 1,
**characterized in that** a covering foil (5) has been applied to the adhesion-promoter layer (4).

3. Backing element according to Claim 1 or 2,
**characterized in that** the foil (1) comprises polymers or polymer mixtures.

4. Backing element according to any of the preceding claims,
**characterized in that** the foil (1) comprises polyurethane.

5. Backing element according to any of the preceding claims,
**characterized in that** the foil (1) comprises polyvinyl chloride, polyethylene or polyacrylate, or is composed thereof.

6. Backing element according to any of the preceding claims,
**characterized in that** the roughness depth of the surface (2) is from 70 to 10 µm.

7. Backing element according to any of the preceding claims,
**characterized in that** the surface energy of the foil (1) is at least 40 mN.

8. Backing element according to any of the preceding claims,
**characterized in that** a colour (6) has been applied to the foil (1).

9. Backing element according to any of the preceding claims,
**characterized in that** a colour layer (6) composed of solvent-free colours has been applied to the foil (1).

10. Backing element according to any of the preceding claims,
**characterized in that** the colour layer (6) applied to the foil (1) comprises colours composed of photo-polymerizable unsaturated monomers, oligomers and/or prepolymers.

11. Backing element according to Claim 10,
**characterized in that** the photo-polymerizable monomers, oligomers or prepolymers comprise an ester, an acrylic or methacrylic acid, derivatives thereof and/or N-vinylamides, preferably using a proportion of from 10 to 80% by weight, very particularly preferably from 40 to 60% by weight.

12. Backing element according to any of the preceding claims,
**characterized in that** a colour layer (6) has been applied to the foil (1) and comprises a photo-initiator which generates free radicals on irradiation with UV light, examples being benzophenones, preferably using a proportion of from 10 to 80% by weight.

13. Backing element according to any of the preceding claims,
**characterized in that** a colour layer (6) has been applied to the foil (1) and comprises an agent which promotes adhesion of the pigments to the backing element, examples being organic nitrogen compounds whose molecular weight is preferably more than 200.

14. Backing element according to any of the preceding claims,
**characterized in that** the Tg of the non-elastic layer (3) is from -20 to -60°C.

15. Backing element according to any of the preceding claims,
**characterized in that** the thickness of the non-elastic layer (3) is from 20 to 100 µm.

16. Backing element according to any of the preceding claims,
**characterized in that** the non-elastic layer (3) comprises metals or is composed thereof.

17. Backing element according to any of the preceding claims,
**characterized in that** it comprises aluminium.

18. Backing element according to any of the preceding claims,
**characterized in that** the adhesion-promoter layer (4) has been designed in such a way as to be applicable at less than 10°C.

19. Backing element according to any of the preceding claims,
**characterized in that** the adhesive-promoter layer (4) has been designed in such a way as to provide stable adhesion at from -20 to +80°C.

20. Backing element according to any of the preceding claims,
**characterized in that** the adhesion-promoter layer (4) has been designed in such a way that the backing element is peelable and reusable.

21. Backing element according to any of the preceding claims,
**characterized in that** a compound based on rubber is used as adhesion-promoter layer (4).

22. Backing element according to any of the preceding claims,
**characterized in that** a compound based on acrylate is used as adhesion-promoter layer (4).

23. Backing element according to any of the preceding claims,
**characterized in that** a reinforcement layer has been used between non-elastic layer (3) and adhesion-promoter layer (4).

24. Use of the backing element according to any of the preceding claims for the production of promotional material which is applied to surfaces in which asphalt, concrete and/or other inorganic materials is/are present.

25. Use according to Claim 24,
**characterized in that** the backing element is applied to areas used by pedestrians.

## Revendications

1. Elément de support multicouche pour la production de matériaux publicitaires, comprenant
a) un film (1) ayant une surface (2) qui présente une profondeur de rugosité d'au moins 10 µm,
b) une couche non élastique (3) et
c) une couche de promoteur d'adhérence (4).

2. Elément de support selon la revendication 1, **caractérisé en ce qu'**une couche de recouvrement (5) est appliquée sur la couche de promoteur d'adhérence (4).

3. Elément de support selon la revendication 1 ou 2, **caractérisé en ce que** le film (1) contient des polymères ou des mélanges de polymères.

4. Elément de support selon l'une quelconque des revendications précédentes, **caractérisé en ce que** le film (1) contient du polyuréthanne.

5. Elément de support selon l'une quelconque des revendications précédentes, **caractérisé en ce que** le film (1) contient du ou consiste en poly(chlorure de vinyle), polyéthylène ou polyacrylate.

6. Elément de support selon l'une quelconque des revendications précédentes, **caractérisé en ce que** la surface (2) présente une profondeur de rugosité de 70 à 10 µm.

7. Elément de support selon l'une quelconque des revendications précédentes, **caractérisé en ce que** l'énergie superficielle du film (1) est d'au moins 40 mN.

8. Elément de support selon l'une quelconque des revendications précédentes, **caractérisé en ce qu'**une encre (6) est appliquée sur le film (1).

9. Elément de support selon l'une quelconque des revendications précédentes, **caractérisé en ce qu'**une couche d'encre (6) à base d'encres sans solvant est appliquée sur le film (1).

10. Elément de support selon l'une quelconque des revendications précédentes, **caractérisé en ce que** la couche d'encre (6) appliquée sur le film (1) contient des encres à base de monomères, oligomères et/ou prépolymères insaturés photopolymérisables.

11. Elément de support selon la revendication 10, **caractérisé en ce que** les monomères, oligomères ou prépolymères photopolymérisables comportent un ester, un acide acrylique ou méthacrylique, des dérivés de ceux-ci et/ou des N-vinylamides, à une concentration allant de préférence de 10 à 80% en poids, de façon tout particulièrement préférée de 40 à 60% en poids.

12. Elément de support selon l'une quelconque des revendications précédentes, **caractérisé en ce que** sur le film (1) est appliquée une couche d'encre (6) qui comporte un photoamorceur engendrant des radicaux libres lors d'irradiation avec de la lumière UV, comme par exemple des benzophénones, à une concentration allant de préférence de 10 à 80% en poids.

13. Elément de support selon l'une quelconque des revendications précédentes, **caractérisé en ce que** sur le film (1) est appliquée une couche d'encre (6) qui comporte un agent favorisant l'adhérence des pigments à l'élément de support, comme par exemple des composés azotés organiques ayant une masse moléculaire de préférence supérieure à 200.

14. Elément de support selon l'une quelconque des revendications précédentes, **caractérisé en ce que** la couche non élastique (3) présente une température de transition vitreuse Tg de -20 à -60 °C.

15. Elément de support selon l'une quelconque des revendications précédentes, **caractérisé en ce que** la couche non élastique (3) a une épaisseur de 20 à 100 µm.

16. Elément de support selon l'une quelconque des revendications précédentes, **caractérisé en ce que** la couche non élastique (3) contient ou consiste en des métaux.

17. Elément de support selon l'une quelconque des revendications précédentes, **caractérisé en ce qu'**il contient de l'aluminium.

18. Elément de support selon l'une quelconque des revendications précédentes, **caractérisé en ce que** la couche de promoteur d'adhérence (4) est constituée de manière à pouvoir être appliquée à une température inférieure à 10 °C.

19. Elément de support selon l'une quelconque des revendications précédentes, **caractérisé en ce que** la couche de promoteur d'adhérence (4) est constituée de manière à garantir une liaison d'adhérence stable entre -20 et +80 °C.

20. Elément de support selon l'une quelconque des revendications précédentes, **caractérisé en ce que** la couche de promoteur d'adhérence (4) est constituée de telle sorte que l'élément de support est retirable et réutilisable.

21. Elément de support selon l'une quelconque des revendications précédentes, **caractérisé en ce qu'**on utilise comme couche de promoteur d'adhérence (4) un composé à base de caoutchouc.

22. Elément de support selon l'une quelconque des revendications précédentes, **caractérisé en ce que** la couche de promoteur d'adhérence (4) est un composé à base d'acrylate.

23. Elément de support selon l'une quelconque des revendications précédentes, **caractérisé en ce qu'**une couche de renforcement est insérée entre la couche non élastique (3) et la couche de promoteur d'adhérence (4).

24. Utilisation de l'élément de support selon l'une quelconque des revendications précédentes, pour la production d'un matériau publicitaire qui est appliqué sur des surfaces comportant de l'asphalte, du béton et/ou d'autres matériaux inorganiques.

25. Utilisation selon la revendication 24, **caractérisée en ce que** l'élément de support est appliqué sur des surfaces de marche.
